# EUROPEAN PATENT SPECIFICATION

(11) **EP 2 792 175 B1**
(45) Date of publication and mention of the grant of the patent: **14.09.2016**
(21) Application number: 11877544.4
(22) Date of filing: 16.12.2011
(51) Int. Cl.: H04W 12/06, H04L 29/06, H04L 29/08, H04W 76/02, H04W 84/12

(54) **A METHOD AND A NETWORK NODE FOR CONNECTING A USER DEVICE TO A WIRELESS LOCAL AREA NETWORK**
VERFAHREN UND NETZKNOTEN ZUM VERBINDEN EINES BENUTZERGERÄTES MIT EINEM WLAN
PROCÉDÉ ET N UD DE RÉSEAU POUR CONNECTER UN DISPOSITIF UTILISATEUR À UN RÉSEAU LOCAL SANS FIL

(43) Date of publication of application: 22.10.2014
(73) Proprietor: Telefonaktiebolaget LM Ericsson (publ), 164 83 Stockholm (SE)
(72) Inventor: MANSOUR, Jade, F-91370 Veriieres Le Buisson (FR)
(74) Representative: Brann AB
(86) International application number: PCT/SE2011/051527
(87) International publication number: WO 2013/089604

(56) References cited:
- EP-A1- 1 770 940
- EP-A1- 1 770 940
- EP-A1- 2 373 075
- WO-A1-2011/121295
- WO-A2-2005/013582
- US-A1- 2006 179 475
- US-A1- 2009 055 900
- US-A1- 2011 010 539
- US-A1- 2011 302 643

## Description

### TECHNICAL FIELD

Embodiments of the present invention discussed herein generally relate to a method and a network node for connecting a user device to a wireless local area network, WLAN

### BACKGROUND

Today more and more user devices are connectable to **W**ireless **L**ocal **A**rea **N**etworks (WLAN). Such user devices may be mobile telephones, laptops, smart phones, tablets PCs etc. There are basically two main access methods to connect a user device to the WLAN

The first method uses an open **S**ervice **S**et **ID**entifier (SSID), e.g. an open WLAN where authentication and authorization is achieved by letting the user device connect to a web portal. The web portal will request the subscriber, i.e. typically a user of the user device, to enter login data such as a username and password.

The second method uses a secured SSID in a closed WLAN, i.e. WPA2 Enterprise aka 802.1x, which is an enhanced security implementation based on a subset of the IEEE P802.11 Standard. The WPA2 Enterprise version verifies network users through a server. There are credentials embedded in the user devices that are used to authenticate the subscriber towards the WLAN and ask for authorization to let the user device access the WLAN. This authentication/authorization is typically transparent to the subscriber.

The trend today is that more and more service providers use the second closed access method, in which the user device sends an authentication request in accordance with the well-known **E**xtensible **A**uthentication **P**rotocol (EAP). However, if the credentials in the user device for some reason are not properly configured the request will get rejected. The subscriber may also be rejected if the WLAN belongs to a service provider that does not have a roaming agreement with the service provider of the user device. Under such circumstances the subscriber will not be able to connect the WLAN, which of course leads to user frustration and causes a time delay before another WLAN can be accessed.

In order to overcome these rejection problems some service providers of WLANs may offer a combination of the two different types of methods to the same subscriber. In such a case the "closed" access method may be the preferred one and the "open" access method may be used as a back up or a secondary choice. In this way it would be possible for a subscriber that has been rejected as described above to use the second access method and make a new attempt to connect to the WLAN. Such a combination of access methods implies the use of two SSIDs for one and the same network in order to work. This is impractical if at all possible.

US Patent Publication 2006/179475 A1 is directed to a system that provides a flexible wireless local area network (WLAN) architecture capable of accommodating different user devices.

### SUMMARY

Thus, there is a need to overcome the above disadvantages with prior art in order to increase the accessibility to WLANs.

In view of the above, an improved method and a network node for connecting a user device to a WLAN would be advantageous and, in particular, a method allowing for a second attempt to connect to the WLAN when there has been a rejection during a first attempt to connect the user device to the WLAN.

It is therefore a general object of embodiments of the present invention to mitigate, alleviate or eliminate one or more of the above-mentioned disadvantages and provide for improved connection of user devices to WLANs.

According to a first aspect of the present invention, a method is provided for connecting a user device to a WLAN, when there has been a rejection during a first attempt to connect the user device to the WLAN. The method intercepts the rejection in a network node and sends a first authentication success message from the network node to the user device. The user device is redirected to an authentication web portal, where the user device is prompted for authentication data. The network node then receives a second authentication success message from the authentication web portal and grants the user device access to the WLAN, the extent of access being defined by the service subscription of the user device.

In a preferred embodiment of the method the first authentication success message also comprises data enforcing the user device into an un-authenticated subscriber management mode in which all network nodes are informed that the user device has not yet been authenticated.

In some embodiments of the invention the step of intercepting the rejection proceeds with generating security keys in the network node which will allow encryption or ciphering.

According to a second aspect of the present invention, a network node is provided, which is configured to perform the steps according to the method of the first aspect of the invention when there has been a rejection during a first attempt to connect a user device to a WLAN.

According to a preferred embodiment the network node for connecting the user device to the WLAN when there has been a rejection during a first attempt to connect a user device to a the WLAN comprises a processor and a memory storing a computer program comprising computer program code which, when run in the processor, causes the network node to intercept the rejection, send a first authentication success message to the user device and redirect the user device to an authentication web portal, where the user device is prompted for authentication data. The first authentication success message also comprises data enforcing the user device (2) into an un-authenticated subscriber management mode in which all network nodes are informed that the user device (2) has not yet been authenticated. Furthermore the network node is caused to receive a second authentication success message from the authentication web portal and grant the user device access to the WLAN, the extent of access being defined by the service subscription of the user devices.

According to a third aspect of the present invention, a computer program is provided for connecting a user device to a WLAN, when there has been a rejection during a first attempt to connect the user device to the WLAN. The computer program comprising computer program code which, when run in a processing unit of a network node causes the network node to perform the method according to the first aspect of the invention.

According to a fourth aspect of the present invention, a computer program product is provided comprising a computer program according to the third aspect of the invention and a computer readable means on which the computer program is stored.

### BRIEF DESCRIPTION OF DRAWING

These and other aspects, features and advantages of the invention will be apparent by reading the following description of embodiments of the present invention in conjunction with the accompanying drawings, in which:
Figure 1 is a schematic view illustrating an exemplary environment, in which a user device may connect to a wireless local area network,
Figure 2 is a schematic view of a network node and some of its components,
Fig. 3 illustrates a flow sequence describing a user device connecting to a WLAN,
Fig. 4 is a flow chart illustrating a method according to an embodiment of the present invention, and
Fig. 5 schematically shows one example of a computer program product comprising computer readable means.

### DETAILD DESCRIPTION

The invention will now be described more fully hereinafter with reference to the accompanying drawings, in which certain embodiments of the invention are shown. The invention may, however, be embodied in many different forms and should not be construed as limited to the embodiments set forth herein; rather, these embodiments are provided by way of example so that this disclosure will be thorough and complete, and will fully convey the scope of invention to those persons skilled in the art. Like numbers refer to like elements throughout the description.

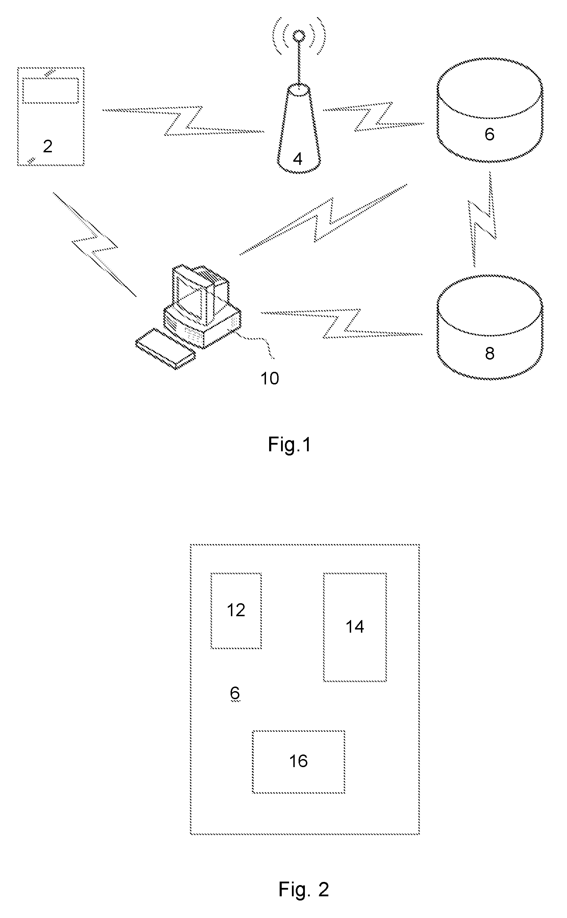

Fig 1 is a schematic view illustrating an exemplary environment, in which a user device may connect to a WLAN. The environment comprises the user device 2 itself, an access point 4 of the WLAN, a network node 6, which is connectable to the WLAN and which further may be connected to a home server 8 and to a web portal 10. The user device 2 may be a mobile telephone, a laptop, a smart phone, a tablets PC or any other mobile user device connectable to the WLAN

Figure 1 only shows one access point 4, but it should be noted that a WLAN usually has many different access points 4 and that figure 1 only shows the principal that the user device 2 is connectable to the WLAN through any access point 4, which is readily understood by a person skilled in the art. Thus, below the reference numeral 4 can denote the WLAN as a whole and not only the access point or points. The network node 6, which is closer depicted in figure 2, comprises a processing unit 16, a control unit 14 etc., capable of executing a computer program comprising computer program code. The computer program may be stored in some type of storage device 12 such as any combination of a **R**andom **A**ccess **M**emory (RAM) and a **R**ead **O**nly **M**emory (ROM). The memory may also comprise persistent storage, which, for example, can be any single one or combination of magnetic memory, optical memory, or solid state memory or even remotely mounted memory.

As is evident in figure 1 the different devices may be interconnected to each other in different ways. It lies within the skills of a person skilled in the art to set up servers, different network nodes, WLANs in order to adapt the environment such that the user device is connectable thereto.

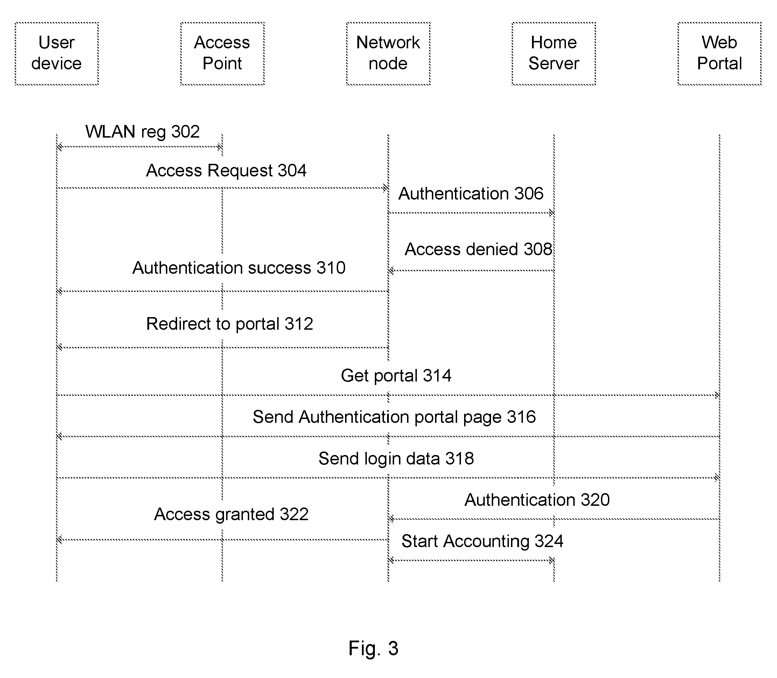

With reference to figure 3 a flow sequence describing how the user device 2 is connecting to the WLAN 4, in the environment depicted in figure 1, will now be described in detail. It should be understood that the connection itself of the user device 2 to the WLAN 4 is done by using the 802.1x, which is an enhanced security implementation based on a subset of the IEEE P802.11 Standard. This standard and its signaling are known to a person skilled in the art and are therefore not explained in detail here. Thus, the flow sequence starts, in step 302, with that the user device 2 finds the access point and is registered in the WLAN 4 to which the access point belongs. The user device 2 then sends an access request, in step 304, to the network node 6. The access request needs to be authenticated, in step 306, before the user device 2 is allowed to access the WLAN 4. The authentication may according to some embodiments be done in the network node 6 itself or as is shown in the embodiment of figure 3 in the home server 8 of the user device 2.

If this first access request attempt is successful a connection between the user device 2 and the WLAN is established and the connection process is terminated. This case with a first successful connection is not what the present invention is concerned with. The present invention is instead focused on the cases when there has been a rejection during a first attempt to connect the user device 2 to the WLAN 4. Such rejection may be the result if the credentials in the user device 2 for some reason are not properly configured. The user device 2 may also be rejected if the WLAN 4 belongs to a service provider that does not have a roaming agreement with the service provider of the user device 2. Under such circumstances the user device 2 has hitherto not been able to connect the WLAN 4. Various embodiments of the present invention address this problem.

Thus, if the first access request attempt is unsuccessful the home server 8 or the network node 6, depending on where the authentication is made, will return an access denied message in step 308, i.e. an rejection to access the WLAN 4. According to some embodiments of the present invention this rejection is intercepted by the network node 6, instead of being sent directly to the user device 2, as in prior art. Thus, the network node 6 keeps the rejection result for itself and instead sends a first authentication success message, in step 310, to the user device 2. In a preferred embodiment of the present invention the first authentication success message also comprises data that enforces the user device into an un-authenticated subscriber management mode in which all network nodes are informed that the user device has not yet been authenticated. During this un-authenticated subscriber management mode the user device 2 is forced to connect to the web portal 10, in steps 312 and 314. The web portal 10 returns an authentication portal page, in step 316, to the user device 2, in which the subscriber has to enter his login data, such as username and password. The login data is sent to the web portal 10 in step 318. If the login data is correct, the network node 6 will get noticed, in step 320, that the user device 2 now has been authenticated and grant access, in step 322, to the user device 2. In some preferred embodiments of the present invention granted access may trigger the start of accounting, in step 324, such that the home server 8 of the user device 2 gets notified and registers the connection time of the user device.

It should be noted that in context of the present application the home server 8 is the server of the service provider of the user device 2.

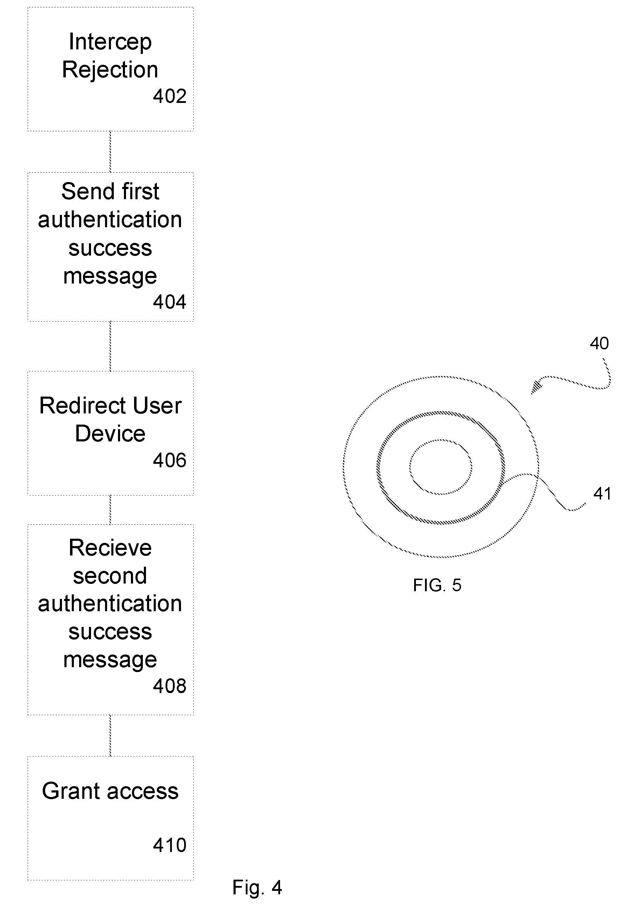

The method according to the present invention will now be described closer with reference to figure 4. As mentioned above the method for connecting the user device 2 to the WLAN 4 is triggered when there has been a rejection during a first attempt to connect the user device 2 to the WLAN 4. Such rejection is intercepted by the network node 6 in a first step 402 of the method. In a second step 404 the network node 6 sends the first authentication success message to the user device 2. The first authentication success message may, as mentioned above comprise data that forces the user device 2 into the un-authenticated subscriber management mode. In this mode all network nodes of the WLAN 4 are informed that the user device 2 has not yet been authenticated. The first authentication success message also comprises data that, in a third step 406 of the method redirects the user device 2 to an authentication web portal 10. At this web portal 10 the user device 2 is prompted for authentication data or login data. Such data may be a username and a password or identification number of a prepaid voucher that the service provider of the present WLAN 4 has issued.

If the authentication is successful the network node 6 will, in a fourth step 408 of the method, receive a second authentication success message from the authentication web portal 10. After this, the network node 6 will grant the user device 2 access to the WLAN 4 in a fifth step 410. The extent of access to the WLAN 4 may be defined by the service subscription of the user device 2 or by the prepaid voucher that was used to get access to the WLAN 4.

In a preferred embodiment the network node 6 may after intercepting the rejection proceed with generating security keys which will allow encryption or ciphering.

According to some embodiments of the present invention the method steps described above are to a large extent performed in the network node 6 when there has been a rejection during a first attempt to connect the user device 2 to the WLAN 4. The network node 6 is configured to perform the steps of intercepting the rejection and sending a first authentication success message to the user device 2. The network node 6 then redirects the user device 2 to an authentication web portal 10, where the user device 2 is prompted for authentication data or login data. Such data may, as mentioned above, be a username and a password or identification number of a prepaid voucher that the service provider of the present WLAN 4 has issued. The network node 6 is then receives the second authentication success message from the authentication web portal 10 and grants the user device 2 access to the WLAN 4, the extent of access being defined by the service subscription of the user devices 2.

In a preferred embodiment of the present invention the network node 6 may further be configured to enforce the user device 2 into an un-authenticated subscriber management mode in which all network nodes are informed that the user device 2 has not yet been authenticated.

In yet another preferred embodiment of the present invention the network node 6 may be configured to, after intercepting the rejection, proceed with generating security keys which will allow encryption or ciphering.

It should be understood that the network node 6 may be any network node in an environment as depicted in figure 1 as long as it is configured to perform the above mentioned functionality. In preferred embodiments of the present invention the network node 6 may be an **A**uthentication, **A**uthorization and **A**ccounting (AAA) server, an AAA proxy or a broadband network gateway.

Turning now to figure 5, which schematically shows one example of a computer program product 40 comprising computer readable means 41. On this computer readable means 41, a computer program can be stored, which computer program, when run on the processing unit 16 of the network node 6, can cause the network node to execute the method according to various embodiments described in the present disclosure. In this example, the computer program product is an optical disc, such as a CD (compact disc), a DVD (digital versatile disc) or a blue-ray. The computer-readable means can also be a solid state memory, such as flash memory or a software package (also sometimes referred to as software application, application or APP) distributed over a network, such as the Internet.

Thus, with embodiments of the method and the network described above it will be relatively easy to connect the user device to the WLAN despite that fact that the user device already has been rejected one time from connecting to the WLAN. This means that rejections that may be the result of not properly configured credentials in the user device or of a WLAN that does not have a roaming agreement with the service provider of the user device are no longer an obstacle for connecting to the WLAN. The present method will give the user device a second chance using a second approach to authenticating the user device via a web portal but without the hassle of having to use of two SSIDs for one and the same WLAN

Although the present invention has been described above with reference to specific embodiments, it is not intended to be limited to the specific form set forth herein. Rather, the invention is limited only by the accompanying claims and, other embodiments that the specific above are equally possible within the scope of the appended claims.

In the claims, the term "comprise/comprises" does not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality. Reference signs in the claims are provided merely as a clarifying example and should not be construed as limiting the scope.

## Claims

1. A method for connecting a user device (2) to a wireless local area network (4), WLAN, when there has been a rejection during a first attempt to connect the user device (2) to the WLAN (4) comprising the steps of:
intercepting the rejection in a network node (6),
sending a first authentication success message from the network node (6) to the user device (2), in which the first authentication success message also comprises data enforcing the user device (2) into an un-authenticated subscriber management mode in which all network nodes of the WLAN (4) are informed that the user device (2) has not yet been authenticated,
redirecting the user device (2) to an authentication web portal (10), such that the user device (2) is prompted for authentication data at the web portal (10),
receiving a second authentication success message in the network node (6) from the authentication web portal (10), and
granting the user device (2) access to the WLAN (4), the extent of access being defined by the service subscription of the user device (2).

2. The method according to claim 1, in which the network node (6) after intercepting the rejection proceeds with generating security keys which will allow encryption or ciphering.

3. The method according to any of claims 1 to 2, wherein the network node (6) is an authentication, authorization and accounting, AAA, server, an AAA proxy or a broadband network gateway.

4. A network node (6) configured to perform the following steps when there has been a rejection during a first attempt to connect a user device (2) to a wireless local area network (4), WLAN:
intercepting the rejection,
sending a first authentication success message to the user device (2), in which the first authentication success message also comprises data to enforce the user device (2) into an un-authenticated subscriber management mode in which all network nodes of the WLAN (4) are informed that the user device (2) has not yet been authenticated,
redirecting the user device (2) to an authentication web portal (10), such that the user device (2) is prompted for authentication data at the web portal (10),
receiving a second authentication success message from the authentication web portal (10), and
granting the user device (2) access to the WLAN (4), the extent of access being defined by the service subscription of the user device (2).

5. The network node (6) according to claim 4, which is further configured to, after intercepting the rejection, proceed with generating security keys which will allow encryption or ciphering.

6. The network node (6) according to any of claims 4 to 5, wherein the network node (6) is an authentication, authorization and accounting, AAA, server, an AAA proxy or a broadband network gateway.

7. A computer program (41) for connecting a user device (2) to a wireless local area network (4), WLAN, when there has been a rejection during a first attempt to connect the user device (2) to the WLAN (4), the computer program (41) comprising a computer program code which, when run in a processing unit (16) of a network node (6) causes the network node (6) to:
intercept the rejection,
send a first authentication success message to the user device (2), in which the first authentication success message also comprises data to enforce the user device (2) into an un-authenticated subscriber management mode in which all network nodes of the WLAN (4) are informed that the user device (2) has not yet been authenticated,
redirect the user device (2) to an authentication web portal (10), such that the user device (2) is prompted for authentication data at the web portal (10),
receive a second authentication success message from the authentication web portal (10), and
granting the user device (2) access to the WLAN (4), the extent of access being defined by the service subscription of the user device (2).

8. A computer program product (40) comprising the computer program (41) according to claim 7 and a computer readable means (12) on which the computer program (41) is stored.

## Patentansprüche

1. Verfahren zum Verbinden eines Benutzergerätes (2) mit einem drahtlosen lokalen Netz (4), WLAN, wenn es während eines ersten Versuches zum Verbinden des Benutzergerätes (2) mit dem WLAN (4) eine Ablehnung gegeben hat, die folgenden Schritte umfassend:
Abfangen der Ablehnung in einem Netzknoten (6),
Senden einer ersten Authentifizierungserfolgsmitteilung von dem Netzknoten (6) an das Benutzergerät (2), wobei die erste Authentifizierungserfolgsmitteilung auch Daten umfasst, die das Benutzergerät (2) in einen nicht authentifizierten Abonnentenverwaltungsmodus zwingen, in dem alle Netzknoten des WLAN (4) darüber informiert werden, dass das Benutzergerät (2) noch nicht authentifiziert ist,
Umleiten des Benutzergerätes (2) zu einem Authentifizierungswebportal (10), sodass das Benutzergerät (2) zu Authentifizierungsdaten an dem Webportal (10) aufgefordert wird,
Empfangen einer zweiten Authentifizierungserfolgsmitteilung in dem Netzknoten (6) von dem Authentifizierungswebportal (10), und
Gewähren von Zugriff auf das WLAN (4) durch das Benutzergerät (2), wobei der Umfang des Zugriffs durch das Leistungsabonnement des Benutzergerätes (2) definiert wird.

2. Verfahren nach Anspruch 1, wobei der Netzknoten (6) nach dem Abfangen der Ablehnung mit dem Generieren von Sicherheitsschlüsseln, die ein Verschlüsseln oder Chiffrieren ermöglichen, fortfährt.

3. Verfahren nach einem der Ansprüche 1 bis 2, wobei der Netzknoten (6) ein AAA-Server zur Authentifizierung, Autorisierung und Abrechnung, ein AAA-Proxy oder ein Breitband-Netz-Gateway ist.

4. Netzknoten (6), der konfiguriert ist, um die folgenden Schritte durchzuführen, wenn es eine Ablehnung während eines ersten Versuches zum Verbinden eines Benutzergerätes (2) mit einem drahtlosen lokalen Netz (4), WLAN, gegeben hat:
Abfangen der Ablehnung,
Senden einer ersten Authentifizierungserfolgsmitteilung an das Benutzergerät (2), wobei die erste
Authentifizierungserfolgsmitteilung auch Daten umfasst, die das Benutzergerät (2) in einen nicht authentifizierten Abonnentenverwaltungsmodus zwingen, in dem alle Netzknoten des WLAN (4) darüber informiert werden, dass das Benutzergerät (2) noch nicht authentifiziert ist,
Umleiten des Benutzergerätes (2) zu einem
Authentifizierungswebportal (10), sodass das Benutzergerät (2) zu Authentifizierungsdaten an dem Webportal (10) aufgefordert wird,
Empfangen einer zweiten Authentifizierungserfolgsmitteilung von dem Authentifizierungswebportal (10), und
Gewähren von Zugriff auf das WLAN (4) durch das Benutzergerät (2), wobei der Umfang des Zugriffs durch das Leistungsabonnement des Benutzergerätes (2) definiert wird.

5. Netzknoten (6) nach Anspruch 4, der weiter konfiguriert ist, um nach dem Abfangen der Ablehnung mit dem Generieren von Sicherheitsschlüsseln, die ein Verschlüsseln oder Chiffrieren ermöglichen, fortzufahren.

6. Netzknoten (6) nach einem der Ansprüche 4 bis 5, wobei der Netzknoten (6) ein AAA-Server zur Authentifizierung, Autorisierung und Abrechnung, ein AAA-Proxy oder ein Breitband-Netz-Gateway ist.

7. Computerprogramm (41) zum Verbinden eines Benutzergerätes (2) mit einem drahtlosen lokalen Netz (4), WLAN, wenn es eine Ablehnung während eines ersten Versuches zum Verbinden des Benutzergerätes (2) mit dem WLAN (4) gegeben hat, wobei das Computerprogramm (41) einen Computerprogrammcode umfasst, der, wenn er in einer Verarbeitungseinheit (16) eines Netzknotens (6) ausgeführt wird, bewirkt, dass der Netzknoten (6):
die Ablehnung abfängt,
eine erste Authentifizierungserfolgsmitteilung an das Benutzergerät (2) sendet, wobei die erste Authentifizierungserfolgsmitteilung auch Daten umfasst, die das Benutzergerät (2) in einen nicht authentifizierten Abonnentenverwaltungsmodus zwingen, in dem alle Netzknoten des WLAN (4) darüber informiert werden, dass das Benutzergerät (2) noch nicht authentifiziert ist,
das Benutzergerät (2) zu einem Authentifizierungswebportal (10) umleitet, sodass das Benutzergerät (2) zu Authentifizierungsdaten an dem Webportal (10) aufgefordert wird,
eine zweite Authentifizierungserfolgsmitteilung von dem Authentifizierungswebportal (10) empfängt, und
Zugriff auf das WLAN (4) durch das Benutzergerät (2) gewährt,
wobei der Umfang des Zugriffs durch das Leistungsabonnement des Benutzergerätes (2) definiert wird.

8. Computerprogrammprodukt (40), umfassend das Computerprogramm (41) gemäß Anspruch 7 und ein computerlesbares Mittel (12), auf dem das Computerprogramm (41) gespeichert wird.

## Revendications

1. Procédé de connexion d'un dispositif utilisateur (2) à un réseau local sans fil (4), WLAN, lorsqu'il y a eu un rejet durant une première tentative de connecter le dispositif utilisateur (2) au WLAN (4), comprenant les étapes de :
interception du rejet dans un noeud de réseau (6),
envoi d'un premier message d'authentification réussie du noeud de réseau (6) au dispositif utilisateur (2), dans lequel le premier message d'authentification réussie comprend également des données forçant le dispositif utilisateur (2) dans un mode de gestion d'abonnés non authentifiés dans lequel tous les noeuds de réseau du WLAN (4) sont informés que le dispositif utilisateur (2) n'a pas encore été authentifié,
redirection du dispositif utilisateur (2) vers un portal Web d'authentification (10), de sorte qu'il est demandé au dispositif utilisateur (2) des données d'authentification dans le portal Web (10),
réception d'un second message d'authentification réussie dans le noeud de réseau (6) en provenance du portal Web d'authentification (10), et
attribution au dispositif utilisateur (2) d'un accès au WLAN (4), l'étendue de l'accès étant définie par l'abonnement du dispositif utilisateur (2) à un service.

2. Procédé selon la revendication 1, dans lequel le noeud de réseau (6), après l'interception du rejet, procède à la génération de clés de sécurité qui autoriseront un chiffrement ou un cryptage.

3. Procédé selon l'une quelconque des revendications 1 à 2, dans lequel le noeud de réseau (6) est un serveur d'authentification, d'autorisation et de comptabilité, AAA, un mandataire AAA ou une passerelle de réseau large bande.

4. Noeud de réseau (6) configuré pour effectuer les étapes suivantes lorsqu'il y a eu un rejet durant une première tentative de connexion d'un dispositif utilisateur (2) à un réseau local sans fil (4), WLAN :
l'interception du rejet,
l'envoi d'un premier message d'authentification réussie au dispositif utilisateur (2), dans lequel le premier message d'authentification réussie comprend également des données pour forcer le dispositif utilisateur (2) dans un mode de gestion d'abonnés non autorisés dans lequel tous les noeuds de réseau du WLAN (4) sont informés que le dispositif utilisateur (2) n'a pas encore été authentifié,
la redirection du dispositif utilisateur (2) vers un portal Web d'authentification (10) de sorte qu'il est demandé au dispositif utilisateur (2) des données d'authentification dans le portal Web (10),
la réception d'un second message d'authentification réussie en provenance du portal Web d'authentification (10), et
l'attribution au dispositif utilisateur (2) d'un accès au WLAN (4), l'étendue de l'accès étant définie par l'abonnement du dispositif utilisateur (2) à un service.

5. Noeud de réseau (6) selon la revendication 4, qui est en outre configuré pour, après l'interception du rejet, procéder à la génération de clés de sécurité qui autoriseront un chiffrement ou un cryptage.

6. Noeud de réseau (6) selon l'une quelconque des revendications 4 à 5, dans lequel le noeud de réseau (6) est un serveur d'authentification, d'autorisation et de comptabilité, AAA, un mandataire AAA ou une passerelle de réseau large bande.

7. Programme d'ordinateur (41) pour connecter un dispositif utilisateur (2) à un réseau local sans fil (4), WLAN, lorsqu'il y a eu un rejet durant une première tentative de connecter le dispositif utilisateur (2) au WLAN (4), le programme d'ordinateur (41) comprenant un code de programme d'ordinateur qui, lorsqu'il est exécuté dans une unité de traitement (16) d'un noeud de réseau (6) amène le noeud de réseau (6) à :
intercepter le rejet,
envoyer un premier message d'authentification réussie au dispositif utilisateur (2), dans lequel le premier message d'authentification réussie comprend également des données forçant le dispositif utilisateur (2) dans un mode de gestion d'abonnés non authentifiés dans lequel tous les noeuds de réseau du WLAN (4) sont informés que le dispositif utilisateur (2) n'a pas encore été authentifié, rediriger le dispositif utilisateur (2) vers un portal Web d'authentification (10) de sorte qu'il est demandé au dispositif utilisateur (2) des données d'authentification dans le portal Web (10),
recevoir un second message d'authentification réussie en provenance du portal Web d'authentification (10), et
attribuer au dispositif utilisateur (2) un accès au WLAN (4), l'étendue de l'accès étant définie par l'abonnement du dispositif utilisateur (2) à un service.

8. Produit-programme d'ordinateur (40) comprenant le programme d'ordinateur (41) selon la revendication 7 et un moyen lisible par ordinateur (12) sur lequel est stocké le programme d'ordinateur (41).
